(19) **Europäisches Patentamt**
**European Patent Office**
**Office européen des brevets**

(11) **EP 4 113 396 A1**

(12) **EUROPEAN PATENT APPLICATION**

(43) Date of publication:
**04.01.2023 Bulletin 2023/01**

(51) International Patent Classification (IPC):
**G06N 7/00** *(2006.01)*     **G05B 13/02** *(2006.01)*
**G06N 5/02** *(2006.01)*     **G06N 3/00** *(2006.01)*

(21) Application number: **21305896.9**

(22) Date of filing: **29.06.2021**

(52) Cooperative Patent Classification (CPC):
**G06N 7/005; G05B 13/0265; G06N 3/008;**
**G06N 5/022; G06N 5/025**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Université de Caen Normandie**
  **14032 Caen Cedex 5 (FR)**
• **Centre National de la Recherche Scientifique - CNRS**
  **75794 Paris Cedex 16 (FR)**

• **Ecole Nationale Supérieure d'Ingénieurs de Caen**
  **14050 Caen Cedex 4 (FR)**

(72) Inventors:
• **MOUADDIB, Abdel-Ilah**
  **14032 Caen (FR)**
• **JEANPIERRE, Laurent**
  **14610 Epron (FR)**

(74) Representative: **BCF Global**
  **Centre d'Entreprise et d'Innovation**
  **56, Bd Niels Bohr**
  **CS 52132**
  **69603 Villeurbanne Cedex (FR)**

(54) **SYSTEMS AND METHODS FOR OPERATING AN AUTONOMOUS SYSTEM**

(57)     Systems and methods for managing an execution of an action strategy by an autonomous system are disclosed. The action strategy comprises a series of actions to be performed by the autonomous system to accomplish a corresponding active objective. The method comprises identifying, by a processor of the autonomous system, an active objective to be accomplished by the autonomous system, the active objective describing a hierarchy of actions to be performed to accomplish the corresponding active objective. The method comprises generating, by the processor, an action strategy from the hierarchy of actions of the active objective, the actions of the action strategy corresponding to the actions of the hierarchy of actions of the active objective and executing the action strategy. Upon completion of an execution of an action, the processor provides data comprising information relating to a state of completion of the action strategy.

Figure 4

EP 4 113 396 A1

**Description**

**FIELD**

The present technology relates to systems and methods for managing execution of action strategies and, more particularly, to intelligent autonomous systems interacting within their dynamic environment.

**BACKGROUND**

Recent developments in autonomous decision-making processes has been a major step in developing autonomous systems. Potential applications cover a wide range of domains such as, but not limited to, assistive humanoid robotic systems, or network flow monitoring and managing systems. Autonomous systems are expected to perform tasks to satisfy a user, an interacting human, or any object requiring assistance while abiding by predefined and/or changing rules. Such autonomous systems developed for handling various activities may therefore need to be able to detect abnormal occurring events or abnormal situations to further identify objectives to be fulfilled to address said abnormal situations by generating and executing action strategies, or "policies".

Even though the recent developments identified above may provide benefits, improvements are still desirable.

The subject matter discussed in the background section should not be assumed to be prior art merely as a result of its mention in the background section. Similarly, a problem mentioned in the background section or associated with the subject matter of the background section should not be assumed to have been previously recognized in the prior art. The subject matter in the background section merely represents different approaches.

**SUMMARY**

Embodiments of the present technology have been developed based on developers' appreciation of shortcomings associated with the prior art.

In particular, such shortcomings may comprise (1) inappropriateness of a behavior of the autonomous system depending on a given environment in which it is configured to operate; (2) long computation time for establishing a strategy resulting in potential interruptions while operating in a given environment; and/or (3) unsuitability of static strategies of actions in a dynamic environment.

In one aspect, various implementations of the present technology provide a method for managing an execution of an action strategy by an autonomous system, the action strategy comprising a series of actions to be performed by the autonomous system to accomplish a corresponding active objective. The method comprises identifying, by a processor of the autonomous system, an active objective to be accomplished by the autonomous system, the active objective describing a hierarchy of actions to be performed to accomplish the corresponding active objective; generating, by the processor, an action strategy from the hierarchy of actions of the active objective, the actions of the action strategy corresponding to the actions of the hierarchy of actions of the active objective and executing the action strategy. The execution comprises executing, by the autonomous system, the series of actions of the action strategy, an execution of an action being conditioned by a state of the autonomous system and, upon completion of an execution of an action, providing data comprising information relating to a state of completion of the action strategy.

In some embodiments of the method, receiving, by the processor of the autonomous system, the active objective comprises receiving a plurality of active objectives, each active objective being associated with a priority function, the priority function indicating a relative level of priority of the corresponding active objective.

In some embodiments of the method, providing data comprising information relating to a state of completion of the action strategy comprises providing the of priority function of a current active objective.

In some embodiments of the method, an order of execution of a plurality of action strategies corresponding to the plurality of active objectives is based on the priority functions of the one or more active objectives.

In some embodiments of the method, the processor receives a first one of the plurality of active objectives prior to receiving a second one of the plurality of active objectives. The method further comprises interrupting an execution of a first action strategy corresponding to the first active objective if determination is made by the processor that the second active objective of has a higher level of priority relatively to the first active objective; generating a second action strategy is generated from the second active objective; and executing the second action strategy by the autonomous system.

In some embodiments of the method, each action in the hierarchy of actions of the active objective is associated with a priority function, the priority function indicating a relative level of priority of the corresponding action.

In some embodiments of the method, providing data comprising information relating to a state of completion of the action strategy comprises providing the priority function of a current action.

In some embodiments of the method, receiving, by the processor of the autonomous system, an active objective comprises receiving a plurality of active objectives, and execution of a first action strategy corresponding to a first active objective selected from the plurality of active objectives is interrupted at a first action if determination is made by the processor that a second action strategy comprises an action having a higher level of priority relatively to the first action.

In some embodiments of the method, the plurality of active objectives is updated based on data, received by the processor, comprising information about an environment of the autonomous system and a state of the autonomous system.

In a second aspect, various implementations of the present technology provide an autonomous system for executing an action strategy and comprising a processor and a memory configured to store instructions which, upon being executed by the processor, result in the autonomous system performing the method.

In a third aspect, various implementations of the present technology provide an autonomous system configured for executing an action strategy, the action strategy comprising a series of actions to be performed by the autonomous system to accomplish a corresponding active objective. The system comprises a memory comprising a first database populated with candidate objectives, each one of the candidate objectives comprising computer-readable instructions which upon being executed by the autonomous system result in generating the series of action of a corresponding active objective. The system comprises a processor operably coupled to the memory and configured to execute instructions that, when executed, results in operations comprising receiving first instructions causing the processor to select one or more candidate objectives in the first database; generating one or more active objectives from the selected candidate objectives; generating one or more action strategies from the one or more active objectives; and executing the one or more action strategies.

In some embodiments of the system, the processor is further configured to, upon executing an action of an action strategy, provide data comprising information relative to a state of completion of the action strategy; and receive second instructions, based on said information, causing the processor to select one or more candidate objectives in the first database.

In some embodiments of the system, each active objective is associated with a priority function, the priority function indicating a relative level of priority of the corresponding active objective.

In some embodiments of the system, an order of execution of the one or more action strategies are based on the priority functions of the corresponding one or more active objectives.

In some embodiments of the system, execution of a first action strategy corresponding to a first active objective is interrupted at a first action if determination is made by the processor that a second action strategy comprises an action having a higher level of priority relatively to the first action.

In a fourth aspect, various implementations of the present technology provide a computer-implemented method for knowledge-based reasoning to establish a list of active objectives by an autonomous system. The method comprises accessing a list of active objectives, each one of the active objectives comprising a set of parameters and first computer-readable instructions which upon being executed by the autonomous system result in the autonomous system performing a task in accordance with the set of parameters. The method comprises accessing a first database populated with static environment properties, the static environment properties comprising second computer-readable instructions defining properties of entities and relations between the entities. The entities and the relations between the entities define an environment in which the autonomous system is configured to operate. The method comprises accessing a second database populated with dynamic environment properties, the dynamic environment properties comprising third computer-readable instructions generated by the autonomous system based on events having been observed by the autonomous system, the events having occurred during operation of the autonomous system in the environment. Upon observing, by the autonomous system, a new event in the environment, the method comprises generating a new dynamic environment property based on the new event; entering the new dynamic environment property to the second database; executing coherence checking on the new dynamic environment property and the static environment properties, the coherence checking comprising comparing the new dynamic environment property with the static environment properties to assess whether the new dynamic environment property conflicts with at least one of the static environment properties; and identifying the new dynamic environment property as incoherent if determination is made that the new dynamic environment property conflicts with at least one of the static environment properties.

In some embodiments of the method, the method further comprises determining whether the new dynamic environment property is incoherent. If the new dynamic environment property is incoherent, the method comprises accessing a third database populated with candidate objectives, each one of the candidate objectives comprising fourth computer-readable instructions which upon being executed by the autonomous system result in generating the first computer-readable instructions; generating a new active objective from the candidate objectives based on the new event; and entering the new active objective to the list of active objectives.

In some embodiments of the method, the execution of coherence checking comprises: if determination is made that the new dynamic environment property is conflicting with at least one static environment properties of the first database, marking the new dynamic environment property as incoherent, a conflict between the new dynamic environment property and at least one static environment properties being caused by an opposition of their respective computer-readable instructions; and identifying the new dynamic environment property as coherent otherwise.

In some embodiments of the method, generating a new active objective from the candidate objectives based on the new event comprises: selecting a candidate objective from the candidate objectives of the third database; generating new active objective parameters based on the new event; and associating the new active objective parameters to the selected candidate objective.

In some embodiments of the method, each candidate objective of the third database comprises an activation condition, the activation condition corresponding to one or more dynamic environment properties and the activation condition being fulfilled if determination is made that the corresponding one or more dynamic environment properties are found in the second database, and a selection of a candidate objective from the candidate objectives of the third database is based on the activation condition of the candidate objective.

In some embodiments of the method, the first database further comprises common-sense rules, each common-sense rule comprising fifth computer-readable instructions defining general properties of the entities and general relations between the entities, each general property being property of a group of entities and each general relation between the entities being relation between groups of entities.

In some embodiments of the method, the common-sense rules are populated by an operator of the autonomous system and describe a cultural context of the environment in which the autonomous system is configured to operate.

In some embodiments of the method, the operator employs a Machine Learning Algorithm (MLA) to generate one or more of the common-sense rules.

In some embodiments of the method, upon entering a new dynamic environment property based on a new event in the second database, coherence checking is further executed on the new dynamic environment property and the common-sense rules, and if determination is made that the new dynamic environment property conflicts with at least one of the common-sense rules: accessing the third database populated with candidate objectives; generating a new active objective from the candidate objectives based on the new event; and entering the new active objective to the list of active objectives.

In some embodiments of the method, upon entering a new dynamic environment property in the second database, coherence checking is further executed on the new dynamic environment property and the list of active objectives, and, if determination is made that the new dynamic environment property conflicts with at least one of the active objectives, removing the at least one of the active objectives from the list of active objectives.

In some embodiments of the method, the dynamic environment properties are associated with one or more characteristics of the corresponding event, the characteristics being selected in a group of characteristics comprising: one or more actors of the event, a location of the event, a time of the event and an action performed by the one or more actors of the event.

In some embodiments of the method, one or more dynamic environment properties describing meta-events are generated if determination is made that predefined combinations of dynamic environment properties are found in the second database, each predefined combination of dynamic environment properties corresponding to a meta-event and causing a generation of a corresponding dynamic environment property in the second database.

In a fifth aspect, various implementations of the present technology provide a computer-readable support comprising instructions which, upon execution of the instructions, cause a computer to carry out the steps of the method.

In a sixth aspect, various implementations of the present technology provide an autonomous system configured to manage a list of active objectives. Each one of the active objectives comprises a set of parameters and first computer-readable instructions which upon being executed by the autonomous system results in the autonomous system performing a task in accordance with the set of parameters. The system comprises one or more sensing devices configured to detect events, the events occurring or having occurred in an environment in which the autonomous system is configured to operate. The system comprises a memory comprising a first database populated with static environment properties, the static environment properties comprising second computer-readable instructions defining properties of entities and relations between the entities, the entities and the relations between the entities defining the environment. The memory comprises a second database populated with dynamic environment properties, the dynamic environment properties comprising third computer-readable instructions generated by the autonomous system based on the detected events; and a third database comprising candidate objectives. The system comprises a processor operably coupled to the memory and configured to execute instructions that, when executed, results in operations comprising, upon observing, by the autonomous system, a new event in the environment, generating a new dynamic environment property based on the new event. The system is configured to enter the new dynamic environment property to the second database and execute coherence checking on the new dynamic environment property and the static environment properties, the coherence checking comprising comparing the new dynamic environment property with the static environment properties to assess whether the new dynamic environment property conflicts with at least one of the static environment properties. The system is configured to, if determination is made that the new dynamic environment property conflicts with at least one of the static environment properties, access the third database populated with candidate objectives, each one of the candidate objectives comprising fifth computer-readable instructions which upon being executed by the autonomous system result in generating the first computer-readable instructions, generate a new active objective from the candidate objectives based on the new event, and enter the new active objective to the list of active objectives.

In some embodiments of the system, upon executing coherence checking, the processor is further configured to, if determination is made that the new dynamic environment property is conflicting at least one static environment properties of the first database, mark the new dynamic environment property as incoherent, a conflict between the new dynamic environment property and at least one static environment properties being caused by an opposition of their respective computer-readable instructions; and identify the new dynamic environment property as coherent otherwise.

In some embodiments of the system, the first database further comprises common-sense rules, each common-sense rule comprising fourth computer-readable instructions defining general properties of the entities and general relations between the entities, each general property being property of a group of entities and each general relation between the entities being relation between groups of entities.

In some embodiments of the system, upon entering a new dynamic environment property in the second database, the new dynamic environment property being based on a new event, coherence checking is further executed on the new dynamic environment property and the common-sense rules. If determination is made that the new dynamic environment property conflicts with at least one of the common-sense rules, the system is configured to access the third database populated with candidate objectives, generate a new active objective from the candidate objectives based on the new event and enter the new active objective to the list of active objectives.

In some embodiments of the system, the system is configured to select a candidate objective from the candidate objectives of the third database, generate new active objective parameters based on the new event and associate the new active objective parameters to the selected candidate objective to generate a new active objective from the candidate objectives based on the new event comprises.

In some embodiments of the system, each candidate objective of the third database comprises an activation condition, the activation condition corresponding to one or more dynamic environment properties and the activation condition being fulfilled if determination is made that the corresponding one or more dynamic environment properties are found in the second database, and a selection of a candidate objective from the candidate objectives of the third database is based on the activation condition of the candidate objective.

In some embodiments of the system, upon entering a new dynamic environment property in the second database, coherence checking is further executed on the new dynamic environment property and the active objectives, and, if determination is made that the new dynamic environment property conflicts with at least one of the active objectives, removing the at least one of the active objectives from the list of active objectives.

In some embodiments of the system, the processor is further configured to determine a number of occurrences of a dynamic environment property in the second database, and, if determination is made that the number of occurrence is higher than a first threshold, generate a static environment property based on the computer-readable instructions of the corresponding dynamic environmental property.

In a seventh aspect, various implementations of the present technology provide a method for generating an action strategy to be executed by an autonomous system, the action strategy comprising a series of actions to be performed by the autonomous system to accomplish a corresponding active objective in response to detecting an abnormal event, the abnormal events occurring or having occurred in an environment where the autonomous system is configured to operate, the abnormal event being identified as incoherent based on a result of a coherence checking procedure between a description of the corresponding event and properties of the environment. The method comprises accessing a first database populated with event descriptions corresponding to abnormal events detected by the autonomous system. The method comprises accessing a second database populated with candidate objectives. Each candidate objective defines a task accomplishable by the autonomous system and comprises an activation condition corresponding to one or more event descriptions, the activation condition being fulfilled if determination is made that the corresponding one or more event descriptions are found in the first database; and a progressive task unit structure describing a hierarchy of actions to be performed in order to accomplish the corresponding candidate objective, the progressive task unit structure comprising executable modules configured to be executed by the autonomous system to perform the corresponding hierarchy of actions, each executable module corresponding to an action of the hierarchy of actions. The method comprises selecting one or more candidate objectives from the second database by determining whether the activation conditions of the one or more candidate objectives are fulfilled based on the event descriptions; and executing the one or more candidate objectives. An execution of a candidate objective comprises transferring parameters of at least one of the event descriptions that caused the selection of the candidate objective to the candidate objective, thereby defining an active objective; generating an action strategy from the progressive task unit structure of the active objective, a series of actions of the action strategy corresponding to actions corresponding to the executable modules of the progressive task unit structure; and executing the series of actions of the action strategy.

In some embodiments of the method, event descriptions of the first database correspond to abnormal events detected by the autonomous system, each of the abnormal events being identified as incoherent based on a result of a coherence checking procedure between an event description of the corresponding event and properties of the environment, and wherein accessing the first database is made in response to detecting, by the autonomous system, an abnormal event.

In some embodiments of the method, the progressive task unit structures further comprise one or more sequence of processing levels, each sequence of processing levels comprising one or more of the executable modules; a set of state variables describing parameters of a state of an execution of the candidate objective; a set of observable properties, an observable property corresponding to one or more of the event descriptions of the first database; or a combination thereof.

In some embodiments of the method, each executable module of the progressive task unit structures corresponds to configuration of a sub-set of state variables of the set of state variables of the corresponding progressive task unit structure, and, if determination is made that, for a given executable module, a corresponding configuration is not fulfilled upon execution of the action corresponding to the given executable module, said action is identified as a failure of the autonomous system.

In some embodiments of the method, the progressive task unit structure of at least one of the candidate objectives further comprises a failure recovery module configured to be executed by the autonomous system to recover from a corresponding failure of the autonomous system, the corresponding failure of the autonomous system being identified based on a mismatch of the set of state variables and configurations of sub-set of state variables corresponding to the executable module of the at least one progressive task unit structure.

In some embodiment of the method, the at least one of the candidate objective further comprises one or more failure recovery progressive task unit structures comprising a hierarchy of resource-bounded actions to be performed, each failure recovery progressive task unit structure corresponding to a failure recovery module of a progressive task unit structure, execution of the failure recovery module causing an execution of the resource-bounded actions of the failure recovery progressive task unit structure by the autonomous system.

In some embodiments of the method, the executable modules are further associated with an execution score for executing corresponding executable modules, and generating the executable action strategy comprises maximizing a global execution score, the global execution score being a combination of the execution scores associated with the executable modules.

In some embodiments of the method, the execution scores of the executable modules are weighted by execution probabilities of the corresponding executable modules for determining the global execution score, an execution probability describing a probability of an execution of the corresponding executable module by the autonomous system.

In some embodiments of the method, generating the action strategy from the progressive task unit structure of the candidate objective comprises generating a stochastic decision process from the progressive task unit structure. The stochastic decision process comprises at least a set of actions corresponding to the actions of the executable modules of the progressive task unit structure; and a set of states comprising states of the autonomous system, each state corresponding to an outcome of an execution of an executable module. The method comprises executing the stochastic decision process.

In some embodiments of the method, the stochastic decision process is a factored Markov decision process.

In some embodiments of the method, one or more actions corresponding to the executable modules cause an execution of one or more candidate objectives.

In a heigth aspect, various implementations of the present technology provide a computer-implemented method for planning actions to be executed by an autonomous system to fulfill one or more objectives by accomplishing one or more corresponding tasks. The method comprises accessing a set of one or more objectives. Each of the one or more objectives comprises parameters identifying characteristics of the corresponding one or more objectives. The method comprises accessing a first database comprising progressive task unit structures, each progressive task unit structure comprising a hierarchy of actions to accomplish a corresponding task described by executable modules and failure recovery modules, each executable module being configured to be executed by the autonomous system to perform a resource-bounded action of the hierarchy of action. Each failure recovery module is configured to be executed by the autonomous system when determination is made that the autonomous system failed to perform an action corresponding to an executable module to pursue an accomplishment of the corresponding task. The method comprises accessing a second database comprising failure recovery progressive task unit structures comprising a hierarchy of resource-bounded actions to be performed, each failure recovery progressive task unit structure corresponding to a failure recovery module of a progressive task unit structure. An execution of the failure recovery module causes an execution of the resource-bounded actions by the autonomous system. The method comprises selecting one or more progressive task unit structures from the first database based on the parameters of the one or more objectives, each objective corresponding to a progressive task unit structure and executing the selected one or more progressive task unit structures. The execution comprises generating one or more stochastic decision processes from the selected one or more progressive task unit structures. Each stochastic decision processes comprises a set of actions corresponding to the actions of the executable modules and failure recovery modules of the progressive task unit structure; and a set of states corresponding to outcomes of the actions of the executable modules. The method comprises executing the one or more stochastic decision processes by performing one or more actions of the set of actions based on a current state of the autonomous system; and, upon executing the selected one or more progressive task unit structures, if determination is made that the autonomous system is to perform an action corresponding to a failure recovery module, executing the hierarchy of resource-bounded actions of the failure recovery progressive task unit structure of the failure recovery module.

In some embodiments of the method, executing the hierarchy of resource-bounded actions of the corresponding failure recovery progressive task unit structure comprises generating a stochastic decision process from the failure recovery progressive task unit structure. The stochastic decision process comprises a set of actions corresponding to the resource-bounded actions of the failure recovery progressive task unit structure; and a set of states corresponding to outcomes of the resource-bounded actions. The method comprises executing the stochastic decision process by performing one or more actions of the set of actions based on a current state of the autonomous system.

In some embodiments of the method, the stochastic decision process is a factored Markov decision process.

In some embodiments of the method, each executable module is associated with a subset of state variables describing parameters of a state of an execution of the candidate objective; and generating one or more stochastic decision processes from the selected one or more progressive task unit structures comprises selecting executables modules of the selected one or more progressive task unit structures that correspond to predetermined state variables.

In a ninth aspect, various implementations of the present technology provide a system for generating an action strategy to be executed by an autonomous system, the system comprising a processor and a memory configured to store instructions which, upon being executed by the processor, cause the system to perform the methods.

In the context of the present specification, unless expressly provided otherwise, a computer system may refer, but is not limited to, an "electronic device", an "operation system", a "system", a "computer-based system", a "controller unit", a "monitoring device", a "control device" and/or any combination thereof appropriate to the relevant task at hand.

In the context of the present specification, unless expressly provided otherwise, the expression "computer-readable medium" and "memory" are intended to include media of any nature and kind whatsoever, non-limiting examples of which include RAM, ROM, disks (CD-ROMs, DVDs, floppy disks, hard disk drives, etc.), USB keys, flash memory cards, solid statedrives, and tape drives. Still in the context of the present specification, "a" computer-readable medium and "the" computer-readable medium should not be construed as being the same computer-readable medium. To the contrary, and whenever appropriate, "a" computer-readable medium and "the" computer-readable medium may also be construed as a first computer-readable medium and a second computer-readable medium.

In the context of the present specification, unless expressly provided otherwise, the words "first", "second", "third", etc. have been used as adjectives only for the purpose of allowing for distinction between the nouns that they modify from one another, and not for the purpose of describing any particular relationship between those nouns.

Implementations of the present technology each have at least one of the above-mentioned objects and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of implementations of the present technology will become apparent from the following description, the accompanying drawings and the appended claims.

**BRIEF DESCRIPTION OF THE DRAWINGS**

For a better understanding of the present technology, as well as other aspects and further features thereof, reference is made to the following description which is to be used in conjunction with the accompanying drawings, where:

Figure 1 is a diagram of a computing system in accordance with an embodiment of the present technology;

Figure 2 is a diagram of an autonomous system in accordance with an embodiment of the present technology;

Figure 3 is a high-level schematic of a knowledge-based reasoning module in accordance with an embodiment of the present technology;

Figure 4 is a high-level schematic of a progressive task unit structure in accordance with one embodiment of the present technology;

Figure 5 is a descriptive table of a progressive task unit structure in accordance with one embodiment of the present technology;

Figure 6 is a sequence diagram showing operations of a method for generating an optimal policy in accordance with one embodiment of the present technology;

Figure 7 is representation of an action strategy in accordance with one embodiment of the present technology;

Figure 8 is representation of another action strategy in accordance with one embodiment of the present technology; and

Figure 9 is a finite-state machine of an action strategy in accordance with one embodiment of the present technology.

It should also be noted that, unless otherwise explicitly specified herein, the drawings are not to scale.

**DETAILED DESCRIPTION**

The examples and conditional language recited herein are principally intended to aid the reader in understanding the principles of the present technology and not to limit its scope to such specifically recited examples and conditions. It will be appreciated that those skilled in the art may devise various arrangements that, although not explicitly described or shown herein, nonetheless embody the principles of the present technology.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the present technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes that may be substantially represented in non-transitory computer-readable media and so executed by a computer or processor, whether or not such computer or processor is explicitly shown.

The functions of the various elements shown in the figures, including any functional block labeled as a "processor", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. In some embodiments of the present technology, the processor may be a generalpurpose processor, such as a central processing unit (CPU) or a processor dedicated to a specific purpose, such as a digital signal processor (DSP). Moreover, explicit use of the term a "processor" should not be construed to refer exclusively to hardware capable of executing software, and may implicitly include, without limitation, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown. Moreover, it should be understood that module may include for example, but without being limitative, computer program logic, computer program instructions, software, stack, firmware, hardware circuitry or a combination thereof which provides the required capabilities.

The present technology provides more self-sufficiency to autonomous systems by enabling such systems to generate and execute optimal action strategies, or "action policies", based on the available resources. An action strategy may comprise a series of actions to be performed to accomplish a task, where an execution of an action may be adjusted in real-time, or close to real-time, based on executions conditions such as outcomes of other actions, available resources and/or other possible execution conditions. An action strategy may be referred to as an action plan that may be adjusted at any time. Therefore, the systems may be able to sense and interact with a surrounding environment.

Besides, the autonomous system implemented in accordance with the present technology may be able to adapt a strategy in real-time and react to unexpected events, or "abnormal" events, and/or states in order to accomplish the task in the most efficient and satisfying manner. Furthermore, the autonomous system may be able to respond to situations that arise before or during execution of a task.

Various aspects of the present disclosure generally address one or more of the problems found in conventional autonomous systems. To this end, the present disclosure, amongst other aspects, introduces intelligent autonomous system configured to generate and execute assistive action strategies.

With these fundamentals in place, we will now consider some non-limiting examples to illustrate various implementations of aspects of the present technology.

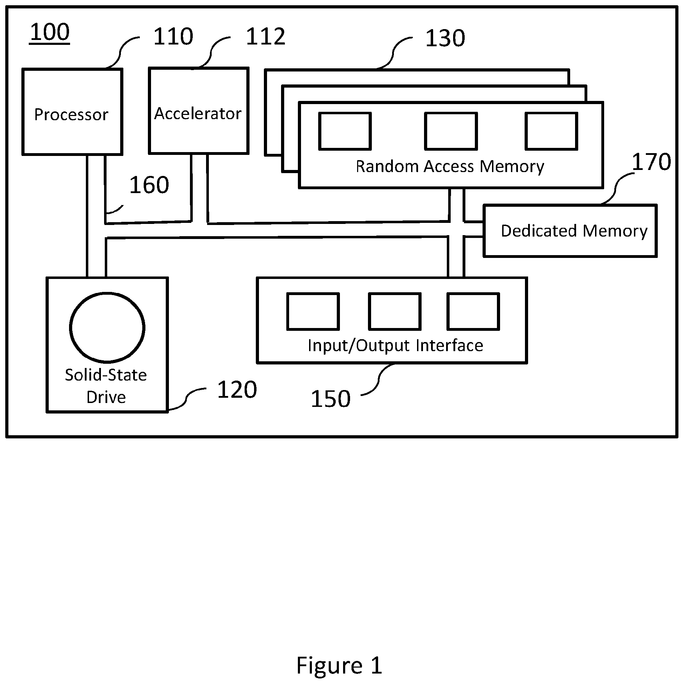

With reference to Figure 1, there is shown a computer system 100 suitable for use in accordance with at least some embodiments of the present technology. The computer system 100 may be implemented by any of a conventional personal computer, a network device and/or an electronic device (such as, but not limited to, a mobile device, a tablet device, a server, a controller unit, a control device, etc.), and/or any combination thereof appropriate to the relevant task at hand. In some embodiments, the computer system 100 comprises various hardware components including one or more single or multi-core processors collectively represented by processor 110, a solid-state drive 120, a random-access memory 130, and an input/output interface 150. The computer system 100 may be a computer specifically designed to operate a machine learning algorithm (MLA). The computer system 100 may be a generic computer system. The computer system 100 may be integrated in a robotic vehicle and/or may be configured to control a robotic vehicle.

In some embodiments, the computer system 100 may also be a subsystem of one of the above-listed systems. In some other embodiments, the computer system 100 may be an "offthe-shelf' generic computer system. In some embodiments, the computer system 100 may also be distributed amongst multiple systems. The computer system 100 may also be specifically dedicated to the implementation of the present technology. As a person in the art of the present technology may appreciate, multiple variations as to how the computer system 100 is implemented may be envisioned without departing from the scope of the present technology.

Those skilled in the art will appreciate that processor 110 is generally representative of a processing capability. In some embodiments, in place of or in addition to one or more conventional Central Processing Units (CPUs), one or more specialized processing cores may be provided. For example, one or more Graphic Processing Units 111 (GPUs), Tensor Processing Units (TPUs), and/or other so-called accelerated processors (or processing accelerators) may be provided in addition to or in place of one or more CPUs.

System memory will typically include random access memory 130, but is more generally intended to encompass any type of non-transitory system memory such as static random access memory (SRAM), dynamic random access memory (DRAM), synchronous DRAM (SDRAM), read-only memory (ROM), or a combination thereof. Solid-state drive 120 is shown as an example of a mass storage device, but more generally such mass storage may comprise any type of non-transitory storage device configured to store data, programs, and other information, and to make the data, programs, and other information accessible via a system bus 160. For example, mass storage may comprise one or more of a solid-state drive, hard disk drive, a magnetic disk drive, and/or an optical disk drive.

Communication between the various components of the computer system 100 may be enabled by a system bus 160 comprising one or more internal and/or external buses (e.g., a PCI bus, universal serial bus, IEEE 1394 "Firewire" bus, SCSI bus, Serial-ATA bus, ARINC bus, etc.), to which the various hardware components are electronically coupled.

The input/output interface 150 may provide networking capabilities such as wired or wireless access. As an example, the input/output interface 150 may comprise a networking interface such as, but not limited to, a network port, a network socket, a network interface controller and the like. Multiple examples of how the networking interface may be implemented will become apparent to the person skilled in the art of the present technology. For example, the networking interface may implement specific physical layer and data link layer standards such as Ethernet, Fibre Channel, Wi-Fi or any other radio data link protocol, Token Ring or Serial communication protocols. The specific physical layer and the data link layer may provide a base for a full network protocol stack, allowing communication among small groups of computers on the same local area network (LAN) and large-scale network communications through routable protocols, such as Internet Protocol (IP).

The input/output interface 150 may be coupled to a touchscreen 190 and/or to the one or more internal and/or external buses 160. The touchscreen 190 may be part of the display. In some embodiments, the touchscreen 190 is the display. The touchscreen 190 may equally be referred to as a screen 190. In the embodiments illustrated in Figure 1, the touchscreen 190 comprises touch hardware 194 (e.g., pressure-sensitive cells embedded in a layer of a display allowing detection of a physical interaction between a user and the display) and a touch input/output controller 192 allowing communication with the display interface 140 and/or the one or more internal and/or external buses 160. In some embodiments, the input/output interface 150 may be connected to a keyboard (not shown), a mouse (not shown), a trackpad (not shown), a vocal Human-Machine Interface (HMI) (not shown) and/or any other device suitable for allowing the user to interact with the computer system 100 in addition to or instead of the touchscreen 190.

According to some implementations of the present technology, the solid-state drive 120 stores program instructions suitable for being loaded into the random-access memory 130 and executed by the processor 110 for executing acts of one or more methods described herein. For example, at least some of the program instructions may be part of a library or an application.

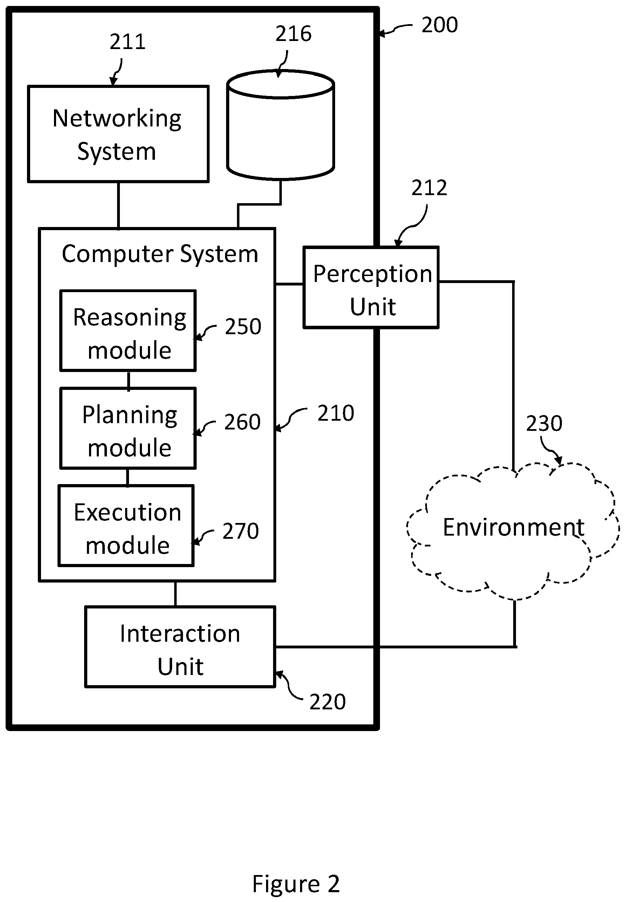

Figure 2 illustrates a high-level schematic diagram of an autonomous system 200 in accordance with an embodiment of the present technology. The autonomous system 200 may comprise a computer system 210. The computer system 210 may be the computer system 100 and/or may include some or all of the components of the computer system 100. The computer system 210 may comprise a reasoning module 250, a planning module 260 and an execution module 270 described in greater details hereinafter.

The autonomous system 200 may operate within an environment 230 and may conduct assistive tasks. The environment 230 may be without limitation a physical environment, such as a shopping center, an office or the like, or may be a logical environment, such as a computing device network, an electrical grid, or the like. The environment 230 may include entities such as, without limitation, shops, doors, corridor, people or any other entity whose features may be relevant to perform an assistive task in the case of a physical environment 230; and processors, networking devices, interfaces or any other entity whose features may be relevant to perform an assistive task in the case of a logical environment 230. Therefore, the entities and relations between the entities may be used to define the environment 230.

The autonomous system 200 is configured to capture raw data in the environment 230 via a perception unit 212. The perception unit 212 may comprise a Human-Machine interface, sensors such as cameras, LiDAR sensors or any type of sensing devices adapted for a physical environment 230, and may comprise ammeters, dataflow sensors, connexion indicators, or any type of sensors adapted for a logical environment 230. The raw data may be processed by the computer system 210 communicably connected to the perception unit 212. The computer system 210 is configured to generate dynamic environment properties, or "facts", under the form of computer-readable instructions to describe events occurring in the environment 230, execute coherence checking of the generated dynamic environment properties and further interact with the entities of the environment 230 if determination is made the one or more dynamic environment properties are incoherent, or "abnormal". Such computer-readable instructions may be predicate expressions that make declarative statements about the events. A process of the execution of coherence checking is described in greater details hereinafter.

The computer system 210 may be internal or external with respect to the autonomous system and is communicably connected to the autonomous system 200. In one embodiment, the computer system 210 may be external and communicably connected to a plurality of autonomous systems 210 via a network (not shown).

The computer system 210 may be configured to store the dynamic environment properties and any information that may be used by the computer system 210 in a memory 216 under specific computer-readable formats described hereinafter. The memory 216 may be embedded in the autonomous system 200 or located in an external physical location. The computer system 210 may be configured to access a content of the memory 216 via a network (not shown) such as a Local Area Network (LAN) and/or a wireless connexion such as a Wireless Local Area Network (WLAN) or Wide Area Network (WAN). The autonomous system may comprise a networking device 211 communicably connected to the computer system 210 and receiving instructions, dynamic environment properties, or any other information for operation of the autonomous system 200.

The memory 216 may comprise candidate objectives under specific computer-readable formats described hereinafter. One or more candidate objectives may be activated by the computer system 210 upon detection of an abnormal event, thereby defining one or more corresponding "active objectives". The active objectives may be further executed and/or transmitted to an operator of the autonomous system 200 to address the corresponding abnormal event. The active objectives may be stored in the memory 216.

The autonomous system 200 comprises an interaction unit 220 configured to cause the autonomous system 200 to interact within the environment 230 by executing active objectives. The interaction unit 220 may operate interactive elements such as a human-machine interface, one or more screens, speakers, microphone, physical actuators, a driving system or any suitable system that may be used to interact within a physical environment if the environment 230 is a physical environment, or logical actuators, a processor, or any suitable system that may be used in a logical environment if the environment 230 is a logical environment.

In order to lighten the present disclosure, following examples relates to a physical environment 230. This is done merely to ease the reading of the present disclosure, and, again, not to define the scope or set forth the bounds of the present technology.

The computer system 210 is configured to use dynamic environment properties to describe events in the environment 230. Each dynamic environment property may be a computer-readable instruction that comprises event-based statements. An event-based statement is a predefined description function having one or more parameters, the predefined description function representing a characteristic of a corresponding event. For instance, a person identified as $p1$ and detected as running may be described by the computer system 210 with the event-based statement $running(p1)$, where $running()$ is a predefined description function and $p1$ a parameter. An event may correspond to a logical association of event-based statements such as $running(p1) \wedge adult(p1)$, representing the event of an adult identified as $p1$ running. In this illustrative example, $running(p1) \wedge adult(p1)$ is a dynamic environment property being a conjunction of two event-based statements: $running(p1)$ and $adult(p1)$. As persons skilled in the art would understand, there may be a finite number of detectable events for the autonomous system 200 given a certain computer system 210 and a certain perception unit 212, and therefore a finite number of predefined description functions, as their detection depends at least on an accuracy of the sensing devices comprised in the perception unit 212.

The aforementioned representation of a dynamic environment property with event-based statement is not a limitative aspect of the present technology. It is rather one illustrative embodiment among other possible embodiments as representation of events occurring in the environment 230 may have different computer-readable implementations. Dynamic environment properties may be represented by other forms of logic formulas. The event-based statements described hereinabove may take the form of any suitable computer-readable instructions corresponding to a description of a characteristic of an event detected in the environment 230.

The perception unit 212 may be configured to execute signal processing and/or computer vision software applications to detect the occurrence of an event. In order to provide a dynamic environment property corresponding to the event, the computer system 210 is further configured to select one or more event-based statements in a list event-based statements, the list of event-based statements being a list of characteristics of events that may be detected by the perception unit 212. As an example, the perception unit 212 may detect that an adult is running in the mall. The computer system 210 may select the three following event-based statements: adult(p), at(p, mall) and running(p), where p identifies the person running. The event-based statement *adult(p)* corresponds to the detectable characteristic that the person is an adult, the event-based statement *at(p, mall)* corresponds to the detectable characteristic that the person is located in the mall and the event-based statement *running(p)* corresponds to the detectable characteristic that the person is running. The person may be listening to music with headphones. However, if the perception unit 212 is not configured to detect this characteristic, no event-based statement may be available to represent this characteristic. Therefore, this characteristic may not be a part of the dynamic environment property generated by the computer system 210.

The computing unit generates the dynamic environment property by associating the event-based statements with logical conjunctions:

E1: adult(p) $\wedge$ at(p, mall) $\wedge$ running(p)

Additionally or alternatively, the computing unit may generate a description of an event under the following form: Event(id, location 1, time t, agent p, semantic) where *id* is an identifier of the event, *location l* is the location of occurrence of the event, *time t* is the time of occurrence of the event, *agent p* is an actor or subject-matter of the event and *semantic* is a semantic description of the event based on event-based statements. For instance, a semantic description may comprise the following attributes:

At |In| In front of |motionless |running |rest area |request | ...

The description of the event may be stored in the memory 216. In accordance with this embodiment, a description of the example hereinabove is the following:

Event(1, mall, 10:40, p, running(p); adult(p))

Note that a correspondence between the dynamic environment property and the description of the corresponding event is merely a choice of representation of the information. The description form may be generated from event-based statements and *vice versa.*

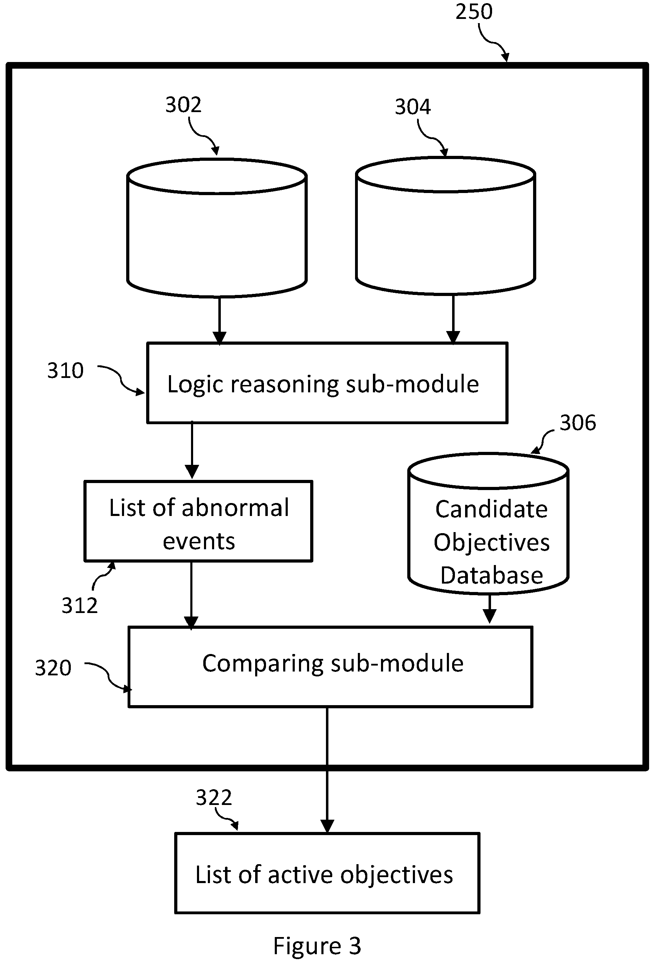

Turning now to Figure 3, a high-level schematic of the reasoning module 250, or "knowledge-based reasoning module" 250 is illustrated. The reasoning module 250 may be comprised in the computer system 210 and may be configured to execute coherence checking on dynamic environment properties. To that end, the reasoning module 250 comprises a first database 302 configured to store static environment properties and a second database 304 configured to store dynamic environment properties. Without limitations, dynamic environment properties and static environment properties may be represented under the logic programming language PROLOG.

Static environment properties comprise computer-readable instructions configured to define properties of entities of the environment 230 and relations between the entities. For example, a semantic map of a shopping center with information relating to specific area of the shopping center may be populated in the first database 302, the entities comprising shops and/or points of interest of the shopping center. In this example, the first database 302 may comprise metric relations, topological relations, and/or qualitative spatial relations between areas and/or shops of the shopping center. More generally, the first database 302 is configured to store descriptive properties and attributes of the entities in the environment 230. In the same or another embodiment, static environment properties are represented as static statements or logical associations of static statements such as:

P1: name(store1 ; abc);

P2: sells( abc; childrenClothes);

P3: sells( abc; toys);

P4: ¬ at(p,corridor1).

The static statements are similar to the event-based statements as they are similarly represented and are composed of the similar predefined description functions. However, static statements defining static environment properties are initially populated by an operator of the autonomous system 200 in the first database 302 and do not represent events. In this embodiment, an operator may be a human operator, or an operating computer system communicably connected to the first database 302 and configured to automatically populate said database based on information received by the operating computer system.

Moreover, predefined description functions of static statements may apply to every object that corresponds to the same parameter. As an example, P4, which indicate that no one should be in *corridor1*, applies to every object *p* that is a person and does not apply to one person only.

In the illustrative static environment properties hereinabove, P1 indicates that *abc* is the name of a store identified as *store1*, P2 and P3 respectively indicate that the store *abc* sells clothes for children and toys and P4 indicates that a corridor identified as *corridor1* is closed as nobody should be found here.

The static statements defining static environment properties in the first database 302 may be initially and/or further updated by an operator to update specific information. As an example, an operator may delete P4 to inform the autonomous system 200 that *corridor1* is not closed anymore and add a new static environment property to indicate that another corridor identified as *corridor2* is closed. The update of the static environment properties in the first database 302 may be a periodic automatic update based on information from the operating computer system. For example, the first database 302 may be updated with an Over-The-Air (OTA) update based on information extracted from the operating computer system.

The first database 302 further comprises common-sense rules that are computer-readable instructions populated by an operator and corresponding to common facts that all humans are expected to know, such as "children like toys", in a computer-readable format. As an example, the first database 302 may contain information that "People are generally not running in a mall" or "fire in a store is dangerous" under a computer-readable format. The common-sense rules may be adjusted by an operator to appropriate with a cultural context of the environment 230 and thereby develop a common-sense reasoning by the autonomous system 200. In one embodiment, the operator employs a Machine Learning Algorithm (MLA) to generate common-sense rules based on training datasets, the training datasets comprising training common-sense rules and information about the cultural context of the environment 230. As an example, information about the cultural context of the environment 230 may be inferred from dynamic and/or static environment properties.

For instance, a common-sense rule may indicate that a person should not run if the autonomous system 200 is to operate in a museum, while it may be normal if the autonomous system 200 operates in a sport facility.

The common-sense rules may be represented as static statements or logical associations of static statements such as:

K1: adult(p) ∧ at(p, mall) ∧ ¬running(p)

K2: at(p, mall) ∧ child(p) ∧ interestedtobuy(p, toys);

K3: at(p, mall) ∧ adult(p) ∧ (interestedtobuy (p, clothes) ∨ interested(p, restaurant)).

In the illustrative static environment properties hereinabove, K1 indicates that adult in the mall usually do no run, K2 indicates that children in the mall are usually interested to buy toys and K3 indicates that persons in the mall that are adults are usually interested to buy clothes or going to restaurants.

The computer system 210 may be configured to populate new common-sense rules or static environment properties in the first database 302 or send a signal, a notification or the like to an operator to suggest the population of new common-sense rules or static environment properties if determination is made that an event occurs several times. For instance, a threshold of occurrence may be associated with a first dynamic environment property by an operator. Therefore, the computer system 210 may be configured to generate a common-sense rule or a static environment property based on the first dynamic environment property when determination is made that a number of occurrences of the event corresponding to the first dynamic environment property has been exceeded. As an example, if determination is made by the autonomous system 200 that a security agent is in front a certain shop at a certain hour every day for 7 days, the knowledge-based computer system 210 may be configured to generate a static environment property in the first database 302 indicating that the security agent is in front the certain shop at the certain hour every day. It may then be "abnormal" to not detect the security agent in front said shop at said hour. Therefore, the autonomous system may adapt definitions of "abnormal" events based on occurrences of events.

The first database 302 may be partitioned into a first sub-database comprising the common-sense rules and a second sub-database comprising other static environment properties.

The second database 304 may be configured to store dynamic environment properties described hereinbefore. Unlike the first database 302, the second database 304 receives dynamic environment properties that corresponds to events having occurred or occurring in the environment 230 and detected by the perception unit 212. Hereinbelow are illustrative examples of dynamic environment properties stored in the second database:

$$E1 : adult(p1) \wedge at(p1, mall) \wedge running(p1) \, ;$$

$$E2: at(p2, mall) \wedge child(p2) \wedge \neg interestedtobuy(p2, toys).$$

In the illustrative dynamic environment properties hereinabove, E1 indicates that a person identified as *p1* is an adult, is at the mall and is running, and E2 indicates that a person identified as *p2* is at the mall, is a child and is not interested to buy toys. Information *that p2* is not interested to buy toys may be determined via a human-machine interface such as a touchscreen pad or any suitable manner to determine this information.

Upon observing a new event in the environment 230 with the perception unit 212, the computer system 210 generates a new dynamic environment in the second database 304 based on the new event. The generation may be performed by selecting one or more event-based statements in a list event-based statements, the list of event-based statements being a list of characteristics of events that may be detected by the perception unit 212. Therefore, the computer system 210 may be configured to select as many event-based statements that correspond to the new event according to the perception unit 212 and further generate the new dynamic environment property. Detection of characteristics may rely on computer vision methods and algorithms used by the perception unit 212. Therefore, the list of event-based statements that may be used to describe an event should be at least populated in a suitable manner so that each characteristic that may be detected by the perception unit 212 may be described by an event-based statement.

The reasoning module 250 may be configured to generate meta-dynamic environment properties based on a set of dynamic environment properties found in the second database 304. The meta-dynamic environment properties are dynamic environment properties that are generated if determination is made by the reasoning module 250 that sets of specific dynamic environment properties are present in the second database 304. The dynamic environment properties of a same set may have a common event-based statements, such as a common location, a common time of occurrence, etc. The meta-events may be generated by using event aggregation operators. For example, *running(p1)* is a meta-dynamic environment property that is generated based on other dynamic environment properties. Indeed, series of dynamic environment properties whose representations are: Event(id, location, time, person, at(person, location)) with the same person may help in detecting if this person walks slowly, rapidly or running, depending on the location and time of those events. Indeed, the distance between two location over the duration derives the speed and the reasoning module 250 may be configured to classify this speed as very high, normal or slow, thereby generating the meta-dynamic environment property *running(p1)* if the speed is very high.

The first and second database 302 and 304 may be referred to as "knowledge bases" as they may comprise logical formulas under computer readable formats that describe characteristics of entities and may therefore render a knowledge of the environment 230.

Based on the first database 302 and the second database 304 the reasoning module 250 may be configured to detect incoherent events, or "abnormal" events as described hereinbelow. The reasoning module 250 comprises a logic reasoning sub-module 310 configured to execute a coherence checking procedure on every new entry in the second database 304, namely every dynamic environment property and meta dynamic environment property. Upon a new entry E0 in the second database, the logic reasoning sub-module 310 is configured to browse the first database 302. The new entry E0 is compared to every combination of common-sense rule and static environment property of the first database 302. In one embodiment, the comparison lies in a logic conjunction $\wedge$. An illustrative and non-limitative pseudo-algorithm for coherence checking of dynamic environment property using rule-based forward reasoning is presented hereinbelow:

```
INPUT: E0, First Database
OUTPUT: Mark E0 as abnormal or normal
Inconsistent = True
For every common sense rule K in First Database :
    For every static environment property P in First_Database :
        Inconsistent = K ∧ P ∧ ¬ E0 ∧ Inconsistent
        If Inconsistent is True, mark E0 as abnormal and stop browsing First Database
```

(continued)

| If Inconsistent is False, E0 is normal. |
| --- |

Hereinbelow is an illustrative example of an execution of coherence checking on dynamic environment properties E1 and E2:

E1: adult(p1) $\wedge$ at(p1, mall) $\wedge$ running(p1)

E2: child(p2) $\wedge$ at(p2, corridor1)

K1: adult(p) $\wedge$ at(p, mall) $\wedge$ ¬running(p)

P1: at(p, mall) $\wedge$ child(p) $\wedge$ interestedtobuy(p, toys)

P2: ¬ at(p,corridor1)

Execution of coherence checking on dynamic environment properties E1 consists in checking the consistency of logical formula ¬E1 $\wedge$ P1 $\wedge$ K1 and ¬E1 $\wedge$ P2 $\wedge$ K1. In this case, the logic reasoning sub-module 310 returns inconsistency of E1 because of formulas ¬E1 $\wedge$ P1 $\wedge$ K1 and ¬E1 $\wedge$ P2 $\wedge$ K1 are inconsistent (i.e. ¬ E1 $\wedge$ P1 $\wedge$ K1 and ¬ E1 $\wedge$ P2 $\wedge$ K1 are True due inconsistency between K1 and E1). Consequently, E1 is marked as "abnormal", or "incoherent". In the same way, the logic reasoning sub-module 310 returns the inconsistency of E2 because -, E2 $\wedge$ P2 $\wedge$ K1 is inconsistent (due inconsistency between P2 and E2).

Upon determining that a dynamic environment property is abnormal, which corresponds to an incoherent event in the environment 230, the logic reasoning sub-module 310 may add the abnormal dynamic environment property to a list of abnormal dynamic environment properties, or "list of abnormal events" 312. As the second database 304 is continuously populated with new dynamic environment properties, the list of abnormal dynamic environment properties 312 may be continuously updated by the logic reasoning sub-module 310. Other coherence checking procedures to identify an event as "abnormal" are contemplated in alternative embodiments.

A role of the autonomous system 200 is to interact with the environment 230 and with entities of the environment 230 to correct and resolve incoherent events. The reasoning module 250 comprises a candidate objectives database 306 comprising candidate objectives that may be selected, or "activated", and further executed and/or transmitted to an operator to correct and resolve incoherent events. Upon activation and execution, a candidate objective becomes an active objective for the autonomous system 200 and represent a task, or a plurality of tasks, to be performed by the autonomous system 200 to correct and resolve incoherent events. Activation of candidate objectives is explained in greater details hereinbelow.

Each candidate objective may comprise computer-readable instructions and may be described by an activation condition, or "selection condition", an identifier, an objective category (e.g. surveillance, assistance, guidance, advertisement, etc), parameters describing variable states such as location, time, object, person, etc, and a progressive task unit structure, or a combination thereof, in the following manner:

Objective(activation_condition, identifier, objective category, parameters, progressive task unit structure).

Progressive task unit structures may comprise series of tasks, instructions, action strategies or any other forms of indication of actions to be performed to fulfill the corresponding objective.

An activation condition of a candidate objective may correspond to one or more dynamic environment properties. The reasoning module 250 may comprise a comparing sub-module 320 configured to compare dynamic properties of the list of abnormal dynamic environment properties 312 with the activation conditions of the candidate objectives. An activation condition is fulfilled if determination is made by the comparing module 320 that the corresponding one or more dynamic environment properties are found in the list of abnormal dynamic environment properties 312. The activation condition may be dynamic environment properties with event-based statements having specific parameters in their predefined description functions or non-specific parameters. An illustrative and non-limitative pseudo-algorithm to determine candidate objective to activate is presented hereinbelow:

```
INPUT: List of abnormal dynamic environment properties, candidate objectives database
OUTPUT: List of active objectives


Foreach dynamic environment properties in List of abnormal dynamic environment
properties do
Foreach candidate_objective in candidate objectives database do
        If candidate_objective•activation_conditions ∧ ¬ dynamic environment property  is
        False then Activate(candidate_objective)
End
End


Retrun list of active objectives
```

Once a candidate objective is activated, the comparing sub-module 320 is configured to execute the candidate objective by generating an active objective from the candidate objective. The comparing sub-module 320 may generate an active objective from a candidate objective by updating the parameters of the candidate objective with the parameters of the predefined description functions of the event-based statements of the dynamic environment properties that caused the activation conditions of the corresponding candidate objective to be fulfilled. Therefore, the generation of a new active objective caused by detection of a new abnormal event is based on the parameters of said abnormal event. The comparing sub-module 320 is configured to establish a list of active objectives 322 to be accomplished by the autonomous system 200. As an example, a candidate objective is presented hereinbelow:

Objective( at(object, location = mall) ∨ running(p) ∨ request_surveillance(location= 1), id, surveillance, {location, person, object}, Surveillance progressive task unit structure)

If the dynamic environment property E1: adult(p1) ∧ at(p1, mall) ∧ *running*(p1) is marked as abnormal, the aforementioned candidate objective may be activated as *p1* may identify a person and *p* may encompass every person. Therefore, the following active objective is generated by the logic reasoning sub-module 310:

Objective (at(object, location = mall) ∨ running(p) ∨ request_surveillance(location= 1), id, surveillance, {mall, p1, ∅}, Surveillance progressive task unit structure)

The list of active objectives 322 may be transmitted to an operator of the autonomous system 200 to provide information about which active objectives may be accomplished according to the autonomous system 200. The list of active objectives 322 may be further sent from the reasoning module 250 to an operator of the autonomous system 200 and/or transmitted to another module of the computer system 210 causing the autonomous system 200 to execute the active objectives. More precisely, the autonomous system 200 may be configured to execute the progressive task unit structures of the active objectives comprised in the list of active objectives 322.

The list of active objectives may be updated by the reasoning module 250. Upon a new entry in the first database 302 or in the second database 304, the logic reasoning sub-module 310 may be configured to execute coherence checking of each active objective of the list of active objectives 322 with the new entry according to the process described hereinbefore, in other words execute a "coherence checking of active objective consistency". If determination is made that one active objective is incoherent with respect to the new entry, said active objective may be removed from the list of active objectives 322.

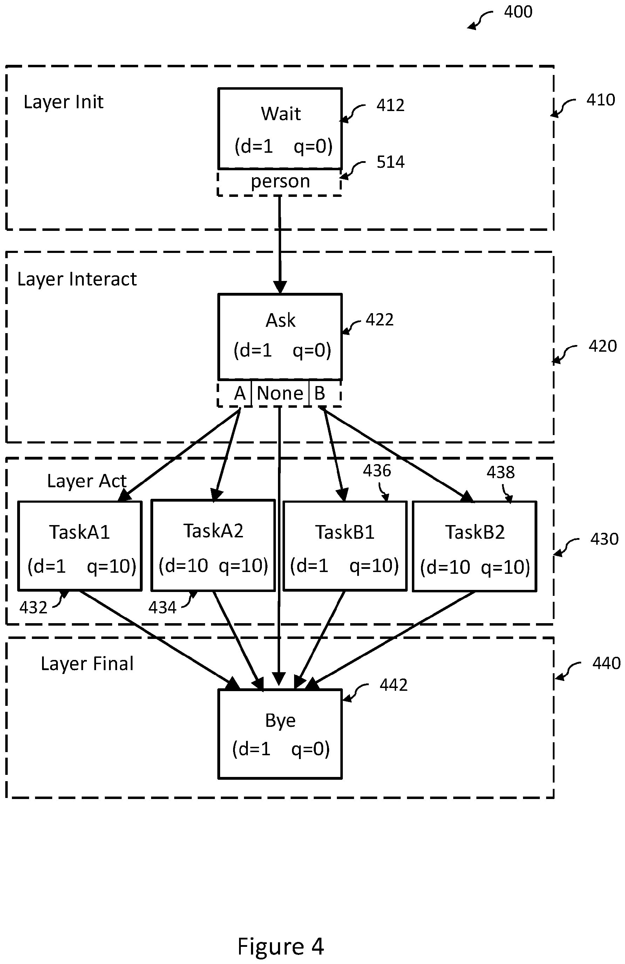

Turning now to Figure 4, a high-level schematic of a progressive task unit structure 400 corresponding to an objective is illustrated in accordance with one embodiment of the present technology. Each progressive task unit structure describes actions to be incrementally performed in order to accomplish the corresponding objective and comprises one or more executable and different modules for performing the actions according to resources available to the autonomous system 200. In other words, the progressive task unit structure 400 may describe a hierarchy of actions, each action corresponding to an executable module of the progressive task unit structure 400. The executable modules are configured to be executed when the corresponding progressive task unit structure is executed. The computer system 210 may generate a corresponding optimal action strategy, or simply "action strategy", from a progressive task unit structure. The following description provides an illustrative representation of a progressive task unit structure.

A progressive task unit may be encoded in an Extensible Markup Language (XML) file and may comprise a sequence of processing levels $L = (lo, l_1, ... , l_{|L|})$, a set of state variables $X = \{X_1, X_2, ..., X_{|X|}\}$, and a set of observable Boolean properties of the environment $O = \{o_1, o_2, ..., o_{|O|}\}$, where $|L|$, $|X|$, $|O|$ are finite, and $|L|$, $|X|$, $|O| \geq 0$. Each state

variable $X_i$ can be assigned a value within a set of finite values, i.e., $X_i \in H_i = \{ \perp, h_{1i}, ..., h_{i|H_i|}\}$, with $H_i$ is finite, and $\perp$ denoting a special null value.

Each processing level $l_i$ may be composed of a set of executable modules, or simply "modules", $M_i = \{m^1_i, ..., m_i^{|M_i|}\}$ and may be associated to a set of active state variables $V_i \subset X$, the active state variables being a sub-set of the state variables X. Additionally or alternatively, each module may correspond to a distinct sub-set of state variables. We denote with $M = \cup_{i=1, ..., |M|} M_i$ the set of all the modules in all levels of a progressive task unit structure. Each module $m_i^j$ may be defined by a non-empty set of options $\{\alpha_i^j, \beta_i^j, ..., \chi_i^j\}$, representing possible outcomes of its execution. The symbols used to denote an option (e.g., $\alpha_i^j$,) may be set as unique identifiers in all the progressive task unit structures. Each option may be associated with one or more of the following attributes:

- an execution condition $\alpha_i^j.\psi$: a specific configuration of the observable Boolean properties of the environment 130 in O. The configuration represents an observable condition used at execution time to determine that the corresponding outcome has occurred. If the execution condition is satisfied, one or more corresponding successor executable modules may be executed. In other word, the execution condition may correspond to events detected by the perception unit 212 indicative of an outcome of the execution of a previous module. The execution conditions corresponding to the options of a given executable module may be mutually exclusive.

- a probability $\alpha_i^j.p$: a probability of occurrence of the corresponding outcome, or "execution probability" of the corresponding executable module; the sum of all the probability values for all the options in a module being equal to 1. The probabilities of occurrence differentiate the present technology from standard planning techniques as they may be learned by the autonomous system 200 during operation, using, for instance, MLA techniques. Indeed, standard planning techniques may consider that an execution of one action may only have one outcome. As an example, in standard planning technique, if the autonomous system is to open a door, a corresponding outcome of this action at planning time is that the door will be open. However, this do not take the probability that the door may be locked or broken, into account. The computer system 210 may establish the probabilities of occurrence of the outcomes based on experiences during operation of the autonomous system and/or using MLA techniques.

- a execution score, or "quality", $\alpha_i^j.q$: an estimated score for achieving this outcome. The execution score may be a constant value or a function of state variables X. It may be used to generate the action strategy to indicate which executable modules should be preferentially executed to perform the corresponding task.

- a duration $\alpha_i^j.d$: an estimated time for achieving this outcome. In one embodiment, d is representative of an estimated amount of a specific resource for performing the actions. For instance, d may be representative of a memory size needed to perform the action, or an estimated amount of battery of the autonomous system 200 needed to perform the action. The duration may be expressed either as a constant value or as a function of state variables.

- one or more successor executable modules $\alpha_i^j.SM$: a set of successor executable modules that are enabled after the corresponding outcome. In the same or another embodiment, successor executable modules are either at the same level or at a following level with respect to the current one.

- one or more state variable updates $\alpha_i^j.SVU$: a set of state variable assignments that must be considered after this outcome, the state variable corresponding to a description of a state of the autonomous system 200. Upon determination that the corresponding outcome occurred, one or more state variable may be updated: $(X_k \leftarrow h'_k) \in \alpha_i^j.SVU$, with $X_i \in V_i$ considering that only state variables corresponding to the current level may be updated, and $h'_i \in H_i$.

Each progressive task unit structure, and thereby each objective, may be associated with a priority function defining a relative level of priority of said progressive task unit structure. Additionally or alternatively, each module may be associated with a priority function defining a relative level of priority of the corresponding executable module compared to other executable modules and/or to levels of priority of progressive task unit structure. Priority functions may be used during execution of the action strategy as it is described hereinafter.

The progressive task unit structure 400 may correspond to a candidate objective or an objective to be fulfilled if determination is made that he autonomous system 200 has to interact with a user. Therefore, the progressive task unit structure 400 may comprise actions to be performed for waiting a user and interacting with said user.

In this illustrative progressive task unit structure 400, the autonomous system 200 may execute two activities A and B upon request of the user. However, the user may not be aware of these abilities. The autonomous system 200 may be initially in a waiting state. Whenever a user is detected in front of the robot, the autonomous system 200 may start an interaction with the user to describe the activities A and B that it may perform. The user may then select one of them or answer that she/he is not interested. If an activity is selected, the autonomous system 200 executes a task for performing it. Each activity may be performed by executions of two alternatives tasks TaskA1 and TaskA2 for activity A and TaskB1 and TaskB2 for activity B. After the execution of the task, the autonomous system 200 may return to the wait state, waiting for a next user.

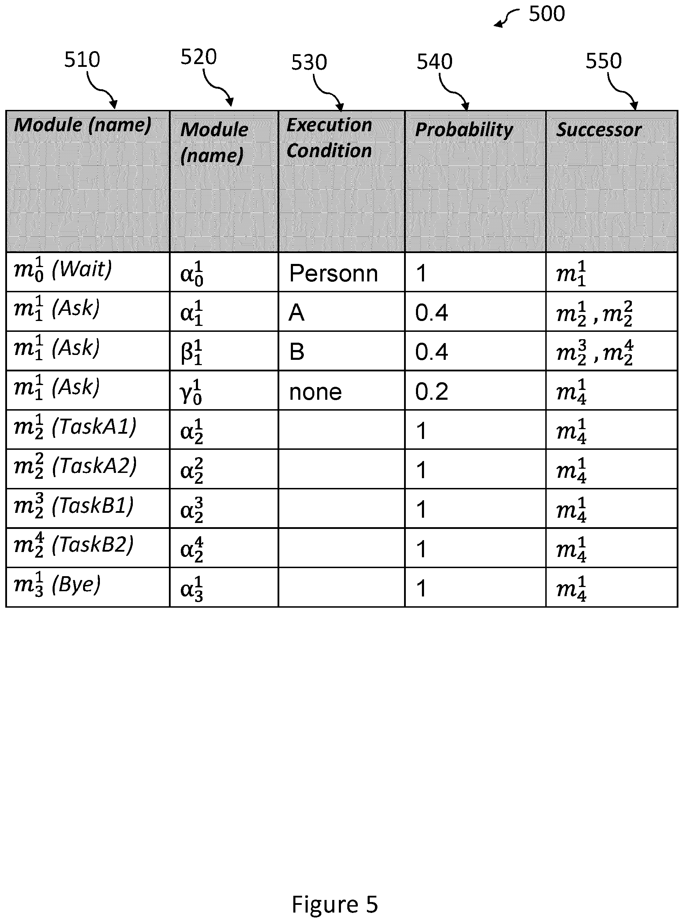

The illustrative progressive task unit structure 400 comprises three processing levels: an initial layer 410 comprising executable module 412, an interaction layer 420 comprising executable module 422, an action layer 430 comprising executable modules 432, 434, 436 and 438, and a final layer 440 comprising an executable module 442. In this illustrative example, X is empty and O = {person; A; B; none}. Specific values for duration (d) and quality (q) are indicated on Figure 4 in the corresponding executable modules, while probability of the outcomes and the list of executable modules M is illustrated in Figure 5.

During the interaction with the user, the following inconveniences may occur: the user does not complete the interaction by not answering to the autonomous system 200 for instance, any action may fail for reasons not defined in the progressive task unit structure 400, and/or any action may be aborted according to some external commands and/or conditions.

To provide robustness to the present technology, each executable module may be associated with a predetermined configuration of a subset of the state variable X. For instance, a first executable module corresponding to an illustrative action of taking a picture with a camera may be associated with the following configuration of state variables:

{camera: ON, battery: HIGH}, the state variables being the camera state, "camera", and a level of battery, "battery", of the autonomous system 200.

The action corresponding to the first executable module may be identified as a failure, or a "failure state" of the autonomous system 200, if determination is made that the configuration of said first executable module is not fulfilled. For instance, if the camera is off and/or the battery is low, the autonomous system may be declared in a failure state. The progressive task unit structure may comprise failure recovery modules configured to be executed when the autonomous system 200 is declared in a failure state. As it will be explained in greater details hereinafter, failure recovery module represent resource-bounded that may be executed by the computer system 210 when determination is made that the autonomous system 200 failed to perform an action corresponding to an executable module to pursue an accomplishment of a corresponding task. In other words, a failure recovery module may be executed when determination is made that state variables, or sub-set of state variables, have one or more specific combinations of values.

The failure recovery modules may correspond to one or more configuration of state variables. In other words, a failure recovery module may "encompass" different failure situations and be executed to recover from said situations.

Referring back to the previous example, if the first executable module is to be executed and the configuration of state variables is {camera: OFF, battery: HIGH}, then the autonomous system may not capture an image with the camera. A failure recovery module corresponding to the configuration of state variable {camera: OFF, battery: HIGH or LOW} may be comprised in the progressive task unit structure to cause the autonomous system to go to a repair station for instance. Possible failures of actions may be therefore anticipated prior execution of action strategies by indicating a resource bounded action to be performed in case of failure, with failure recovery modules.

The progressive task unit structure described herein encompasses a formalism to describe a task. In this embodiment, a progressive task unit structure is formalized as a hierarchy representing different ways to accomplish a corresponding task such that an ability to adapt a depth and a refinement of a task accomplishment according to available resources is provided. The skilled person would understand that the present technology may describe a unified planning language and that Hierarchical Task Networks (HTN), Dynamic Bayes Networks (DBN), and Algebraic Decision Diagrams (ADB) may be retrieved and/or derived from a progressive task unit structure.

Figure 5 is a descriptive table 500 of a progressive task unit structure in accordance with one embodiment of the present technology. The descriptive table 500 comprises a list 510 of the name of the executable modules of the progressive task unit structure 400 in combination with their respective options 420. Each combination of executable and option is associated with its corresponding execution condition in column 530, its corresponding probability in column 540 and its successor executable modules in column 550 of the descriptive table 500.

For instance, the executable module 422 of the progressive task unit structure 400, namely executable module $m_1^1$ in the descriptive table 500, comprises three options: $\alpha_1^1$ corresponding to the outcome where the user selected the activity A, $\beta_1^1$ corresponding to the outcome where the user selected the activity B, and $\gamma_1^1$ corresponding to the outcome where the user selected neither of them.

The progressive task unit structures may be represented as a tree structure illustrated on Figure 4, as a description table as illustrated on Figure 5, or as any other suitable manner with equivalent features. The illustration of Figure 4 and Figure 5 are set as an aid to understanding and not to set forth the bounds of the present technology. This aspect is not limitative.

The planning module 260 may be configured to derive an action strategy from a progressive task unit structure such as the progressive task unit structure 400, an execution of the action strategy resulting in accomplishing the active objective corresponding to said progressive task unit structure. Therefore, the executable action strategy depends on the progressive task unit structures and the state variables of the autonomous system 200. In one embodiment, the planning module 260 may be configured to generate one action strategy for each candidate objective received by the computer system 210. The planning module 260 may be configured to preferably select the active objectives having the higher level of priority and process their progressive task unit structure before processing other active objectives.

Additionally, the planning module 260 may merge a plurality of action strategies corresponding to a plurality of active objectives into one global action strategies by merging the progressive unit structures of the active objectives and generating an action strategy based on the merging of the progressive unit structures. Merging the progressive unit structures may be made by concatenating their respective description tables 500.

In the same or another embodiment, the planning module uses stochastic decision processes to generate the executable action strategy formalized as a factored Markov decision process. A Markov decision process (MDP) is a discrete-time stochastic control process. It consists of a mathematical framework configured for modeling decision making in situations where outcomes may be partly random and partly under the control of a decision maker, namely a user. As persons skilled in the art would understand, various implementations of a process to compute optimal policy based on the progressive task unit structures may be possible while nonetheless remaining within the scope of the present technology.

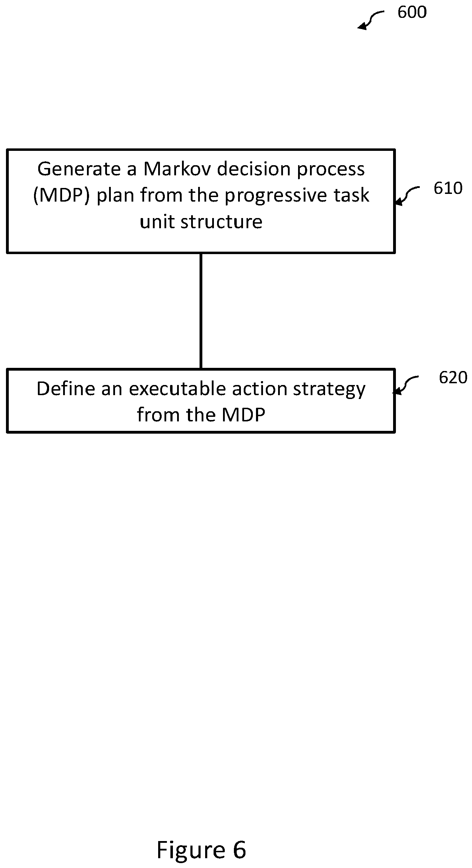

Figure 6 is a sequence diagram showing operation of a method for generating an optimal action strategy in accordance with one embodiment of the present technology. The planning module may be configured to execute the operations illustrated in Figure 6. An MDP is generated based on the progressive task unit structure at step 610, the generation of the MDP being described hereinbelow.

Given a progressive task unit structure as described hereinabove, the planning module is configured to generate an MDP. An MDP is defined as (S; A; T; R), with S is a finite set of states of the autonomous system 200, A is a finite set of actions, T (s; $a_c$; $s_f$) a transition function denoting the probability for going from state s to state $s_f$ using action $a_c$, and R (s; ac; $s_f$) a reward function expressing an expected gain for using action $a_c$ in state s and arriving in state $s_f$.

An MDP may be defined based on a progressive task unit structure as described in A *pratical framework for robust decision-theoretic planning and execution for service robots* (L.Iocchi *et al.* 2016), a content of whih being incorporated by reference. Formally, an output of the planning module at operation 610 may be a

$$\text{MDP} = \langle\, s_0^0;\ G;\ \{\langle s_i^j;\ m_i^j;\ SS_i^j\rangle\}\,\rangle\,,$$ where $s_0^0$ is the initial state, G is a set of final states, and in each tuple $\langle s_i^j,$

$m_i^j,\ SS_i^j\rangle,\rangle$ $s_i^j$ is a state defined by $s_i^j = [\alpha_i^j,\ X_1,\ \ldots\ ,\ X_{|X|}\ ],$ $m_i^j$ is the action to be executed in this state and corresponding to an executable module in the progressive task unit structure, $SS_i^j$ is a set of pairs ( $s_i^k,$

$\alpha_i^k.\psi$ ), with $s_i^k$ being a successor state and $\alpha_i^k.\psi$ is the execution condition declared in the progressive task unit structure and associated to the corresponding outcome.

The planning module is further configured to define an executable action strategy based on the MDP at operation 620. The planning module may be configured to determine a global execution score, the global execution score being a combination of the execution scores associated with the executable modules corresponding to the states of the MDP. In this embodiment, the execution scores are weighted by the execution probabilities of the respective executable modules. In the same or another embodiment, the executable action strategy is defined by solving a Bellman equation given as follows:

$$V(s) = \text{MAX}_{\{m\,\in\,A\}}\ [R(s) + \sum \lambda\ T(s,a,s').V(s')]$$

V is an expected value function representing the expected gain in acting with an action $a_c$ at state s and R and T are respectively the reward and transition functions.

Classical algorithms such as *Value Iteration* [Richard Bellman. A markovian decision process. Indiana Univ. Math. J.] or *Policy Iteration* [R.A. Howard. Dynamic Programming and Markov Processes] are configured to compute an optimal action strategy, or "optimal policy" efficiently.

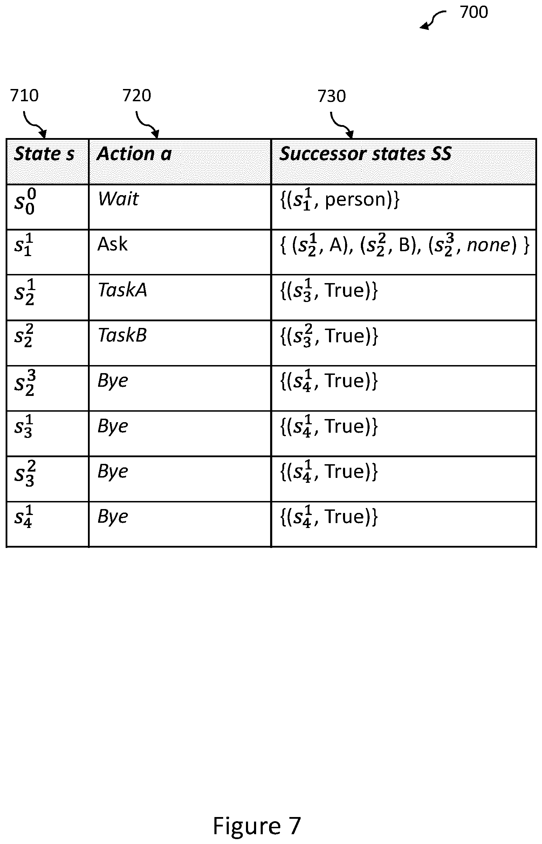

Figure 7 is representation of an action strategy 700 in accordance with one embodiment of the present technology. The action strategy 700 corresponds to the illustrative progressive task unit structure 400. The state $s_0^0$ being the initial state and $G = \{s_4^1\}$ the set of goal states. The representation 700 comprises the states 710 of the MDP, their corresponding actions 720 and their corresponding sets $SS_j^i$ described hereinbefore 730.

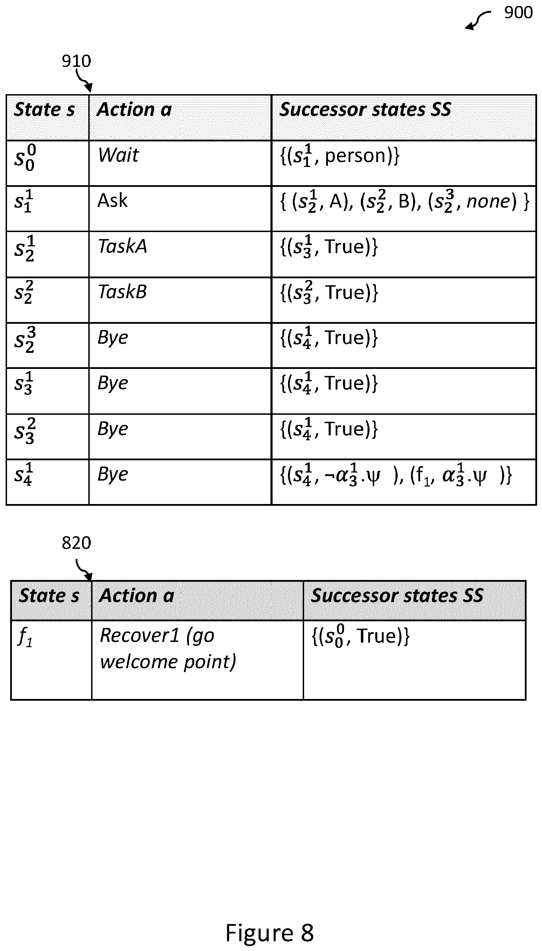

As described hereinbefore, the failure recovery modules of a progressive task unit structure may define failure states of the autonomous system 200. Figure 8 is a representation of an action strategy 800 in accordance with one embodiment of the present technology. A first portion 810 of the action strategy comprises states corresponding to executables modules of the progressive task unit, or "safe" states, and a second portion 820 of the action strategy comprises failure states corresponding to failure recovery modules of the progressive task unit, or "unsafe states". In one embodiment, the first portion 810 and the second portion 820 may correspond to two different action strategies and/or two different progressive task unit structures that may be independently executed. Separating the safe states from the failure states helps to reduce the set of state variables during execution of the action strategy and increase the scalability of the present technology.

Failure recovery modules may correspond either to resource-bounded actions to be performed by the autonomous system 200 or to distinct progressive task unit structure, or "failure recovery progressive task unit structure". In other words, if determination is made that the autonomous system 200 is in an unsafe state corresponding to a failure recovery module of a first progressive task unit structure, a second progressive task unit structure (e.g. failure recovery progressive task unit structure) may be executed. The second progressive task unit structure may comprise a hierarchy of resource-bounded actions to be performed to recover from the failure corresponding to the unsafe state of the autonomous system. A second action strategy may be generated from the second progressive task unit structure and further executed in a similar fashion to what is described hereinbefore. It can be said that failure recovery modules corresponding to resource-bounded actions to be performed by the autonomous system 200 are representative of "partial failure states" of the autonomous system 200, and that failure recovery modules that cause execution, by the computer system 210, of failure recovery progressive task unit structure are representative of "total failure states" of the autonomous system 200.

In the illustrative example of Figure 7, the autonomous system is configured to endlessly repeat the action "Bye" which may be an undesirable behavior, or a "failure state". In Figure 8, a state variable ByeCounter has been added to the corresponding progressive task unit structure to cause the system to transit to a failure state $f_1$ when the execution condition $\alpha_3^1 \cdot \psi$ (ByeCounter = 3) is true. Therefore, a specific action may be performed by the autonomous system 200 when determination is made by the planning module that the execution condition $\alpha_3^1 \cdot \psi$ is true.

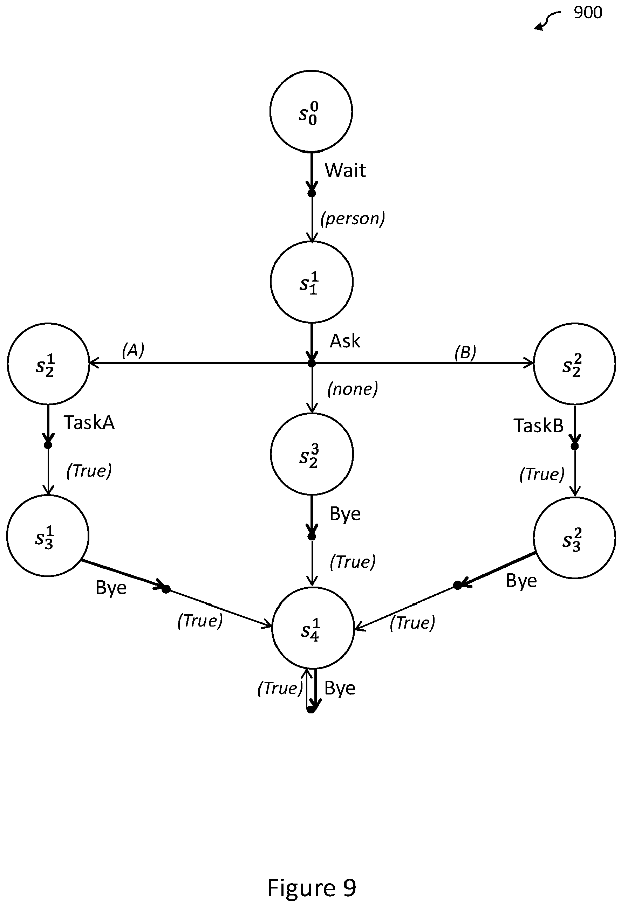

Figure 9 is finite-state machine of the executable action strategy 700 in accordance with one embodiment of the present technology. In this illustrative embodiment, the executable action strategy 700 is represented as an automaton with nodes representing the state $s_i^j$ of the autonomous system 200 and transition representing the execution of the executable action strategy actions $m_i^j$. The action strategy may have either a finite horizon, namely a maximal number of actions is set by the computer system 210, or an infinite horizon, namely an illimited number of actions. The illustrative example of Figure 7 and Figure 9 illustrates an action strategy with an infinite horizon as the successor executable module of the final state is the final state itself. An infinite horizon is a configuration wherein the autonomous system 200 never completely ends an execution of the action strategy.

Using the sub-sets of state variables corresponding to the executable modules may facilitate a generation of an action strategy. Indeed, the computer system may select executable modules that correspond to a sub-set of state variables in the corresponding progressive task unit structure and generate the action strategy based only on those executable modules. For instance, while searching for a person by the autonomous system 200 (e.g. during execution of an action strategy based on an objective indicating that said person is to be searched), if determination is made that the battery is LOW, the computer system 210 may consider only nodes of said action strategy that correspond to executable modules comprising the state variable: battery: LOW. Indeed, in this situation, the autonomous system 200 may not be able to perform actions requiring a high level of battery. For this reason, the sub-sets of state variables may be called "focalisation variables" as other state variables may not be considered at execution time. For example, use of the focalisation variables of the executable modules reduces an action strategy from 500.000 nodes to 100.000 nodes.

Upon definition of the action strategy by, for instance, defining the semantic map of Figure 9, the planning module is configured to further transmit the executable action strategy to the execution module. The execution module is configured to execute the executable action strategy via the interaction unit 220. In the same or another embodiment, the execution module may be communicably connected to the perception unit 212 to determine the state variables X = $\{X_1, X_2, ..., X_{|X|}\}$, and thereby a current state $s_i^j$ of the autonomous system 200. The interaction unit 220 operates physical and/or logical actuators, mechanisms, devices or any element that is configured to cause the autonomous system 200 to interact with the environment 230.

The execution module 270 may be configured to execute the executable action strategy by browsing the action strategy from the initial state. The list of successor states of each state of the MDP may be generated according to the progressive task unit structure as described hereinabove and may be comprised in the action strategy. Thus, execution conditions $\alpha_i^k.\psi$ over observable environment properties of the environment 230 may be assessed by the perception unit 212 during execution of the action strategy. Upon determining in which first state $s_i^j$ the autonomous system 200 is, the execution module 270 may be configured to perform the corresponding action $m_i^j.$ Once this action has been performed, the execution module may be configured to determine a new state $s_i^j$ of the autonomous system 200 among the successor states of the first state $s_i^j.$

Upon determining that the autonomous system is in a final state comprised in G, the execution module is configured to terminate the execution of the plan and return a first signal to the computer system 210 indicating that execution of the action strategy is complete.

Indication of the priority function of a current first active objective, referenced in this paragraph as the "first" level of priority, may be further transmitted to the reasoning module 250. The reasoning module 250 may be configured to continuously compare the priority functions of each active objective in the list of objectives 322. If determination is made by the reasoning module 250 that, during the generation and/or execution of the first action strategy corresponding to the first active objective, a second incoherent dynamic environment property is received and causes the reasoning module 250 to activate a second active objective having a level of priority higher than the first level of priority, the reasoning module 250 sends a signal to the planning module 260 causing an interruption of the generation and/or execution of the first action strategy. The second active objective may be further processed by the planning module 260 and the execution module 270 may execute a second action strategy corresponding to the second active objective. Generation and/or execution of the first action strategy may be resumed once the generation and execution of the second action strategy is complete.

Additionally or alternatively, the execution module 270 may communicate a state of execution of a current action strategy, a priority function of the corresponding active objective and/or any other information to the reasoning module 250. The reasoning module 250 may thereby determine which active objective of the list of objectives 322 may be executed based on the priority functions of each active objective.

Moreover, such comparison of priority functions may be performed between executable modules and active objective, and/or between executable modules. The actions of the action strategies may be associated with the priority functions of their corresponding executable modules in their corresponding progressive task unit structures. Execution of a first action strategy corresponding to a first active objective may be interrupted at a first action if determination is made by the computer system 210 that a second active objective in the list of active objectives 322 have a higher level of priority relative to the first action. Alternatively, execution of a first action strategy corresponding to a first active objective may be interrupted at a first action if determination is made by the computer system 210 that a second action strategy and/or a corresponding second active objective comprises an action and/or a corresponding executable module having a higher level of priority relative to the first action. Either way the second action strategy may be executed prior resuming execution of the first action strategy.

While the above-described implementations have been described and shown with reference to particular steps performed in a particular order, it will be understood that these steps may be combined, sub-divided, or re-ordered without departing from the teachings of the present technology. At least some of the steps may be executed in parallel or in series. Accordingly, the order and grouping of the steps is not a limitation of the present technology.

It should be expressly understood that not all technical effects mentioned herein need to be enjoyed in each and every embodiment of the present technology.

Modifications and improvements to the above-described implementations of the present technology may become apparent to those skilled in the art. The foregoing description is intended to be exemplary rather than limiting. The scope of the present technology is therefore intended to be limited solely by the scope of the appended claims.

**Claims**

1. A computer-implemented method for managing an execution of an action strategy by an autonomous system, the action strategy comprising a series of actions to be performed by the autonomous system to accomplish a corresponding active objective, the method comprising:

   identifying, by a processor of the autonomous system, an active objective to be accomplished by the autonomous system, the active objective describing a hierarchy of actions to be performed to accomplish the corresponding active objective;
   generating, by the processor, an action strategy from the hierarchy of actions of the active objective, the actions of the action strategy corresponding to the actions of the hierarchy of actions of the active objective;
   executing the action strategy, the execution comprising:

   executing, by the autonomous system, the series of actions of the action strategy, an execution of an action being conditioned by a state of the autonomous system;
   upon completion of an execution of an action, providing data comprising information relating to a state of completion of the action strategy.

2. The method of claim 1, wherein receiving, by the processor of the autonomous system, the active objective comprises receiving a plurality of active objectives, each active objective being associated with a priority function, the priority function indicating a relative level of priority of the corresponding active objective.

3. The method of claim 2, wherein providing data comprising information relating to the state of completion of the action strategy comprises providing the priority function of a current active objective.

4. The method of claim 2 or 3, wherein an order of execution of a plurality of action strategies corresponding to the plurality of active objectives is based on the priority functions of the one or more active objectives.

5. The method of any one of claims 2 to 4, wherein the processor receives a first one of the plurality of active objectives prior to receiving a second one of the plurality of active objectives, the method further comprising:

   interrupting an execution of a first action strategy corresponding to the first active objective if determination is made by the processor that the second active objective of has a higher level of priority relatively to the first active objective;
   generating a second action strategy is generated from the second active objective; and
   executing the second action strategy by the autonomous system.

6. The method of any one of claims 1 to 5, wherein each action in the hierarchy of actions of the active objective is associated with a priority function, the priority function indicating a relative level of priority of the corresponding action.

7. The method of claim 6, wherein providing data comprising information relating to a state of completion of the action strategy comprises providing the priority function of a current action.

8. The method of claim 6 or 7, wherein receiving, by the processor of the autonomous system, an active objective comprises receiving a plurality of active objectives, and execution of a first action strategy corresponding to a first active objective selected from the plurality of active objectives is interrupted at a first action if determination is made by the processor that a second action strategy comprises an action having a higher level of priority relatively to the first action.

9. The method of any one of claim 2 to 8, wherein the plurality of active objectives is updated based on data, received by the processor, comprising information about an environment of the autonomous system and a state of the autonomous system.

10. An autonomous system configured for executing an action strategy and comprising a processor and a memory configured to store instructions which, upon being executed by the processor, result in the autonomous system performing the method of any one of claims 1 to 9.

11. An autonomous system configured for executing an action strategy, the action strategy comprising a series of actions to be performed by the autonomous system to accomplish a corresponding active objective, the system comprising:

a memory comprising a first database populated with candidate objectives, each one of the candidate objectives comprising computer-readable instructions which upon being executed by the autonomous system result in generating the series of action of a corresponding active objective;
a processor operably coupled to the memory and configured to execute instructions that, when executed, results in operations comprising:

receiving first instructions causing the processor to select one or more candidate objectives in the first database;
generating one or more active objectives from the selected candidate objectives;
generating one or more action strategies from the one or more active objectives; and
executing the one or more action strategies.

12. The system of claim 11, wherein the processor is further configured to, upon executing an action of an action strategy:

provide data comprising information relative to a state of completion of the action strategy; and
receive second instructions, based on said information, causing the processor to select one or more candidate objectives in the first database.

13. The system of claims 11 or 12, wherein each active objective is associated with a priority function, the priority function indicating a relative level of priority of the corresponding active objective.

14. The system of claim 13, wherein an order of execution of the one or more action strategies are based on the priority functions of the corresponding one or more active objectives.

15. The system of claims 13 or 14, wherein execution of a first action strategy corresponding to a first active objective is interrupted at a first action if determination is made by the processor that a second action strategy comprises an action having a higher level of priority relatively to the first action.

Figure 1

Figure 2

250

302    304

Logic reasoning sub-module    310

List of abnormal events    312

306 Candidate Objectives Database

Comparing sub-module    320

322 List of active objectives

Figure 3

Figure 4

500

510 520 530 540 550

| Module (name) | Module (name) | Execution Condition | Probability | Successor |
|---|---|---|---|---|
| $m_0^1$ (Wait) | $\alpha_0^1$ | Personn | 1 | $m_1^1$ |
| $m_1^1$ (Ask) | $\alpha_1^1$ | A | 0.4 | $m_2^1, m_2^2$ |
| $m_1^1$ (Ask) | $\beta_1^1$ | B | 0.4 | $m_2^3, m_2^4$ |
| $m_1^1$ (Ask) | $\gamma_0^1$ | none | 0.2 | $m_4^1$ |
| $m_2^1$ (TaskA1) | $\alpha_2^1$ | | 1 | $m_4^1$ |
| $m_2^2$ (TaskA2) | $\alpha_2^2$ | | 1 | $m_4^1$ |
| $m_2^3$ (TaskB1) | $\alpha_2^3$ | | 1 | $m_4^1$ |
| $m_2^4$ (TaskB2) | $\alpha_2^4$ | | 1 | $m_4^1$ |
| $m_3^1$ (Bye) | $\alpha_3^1$ | | 1 | $m_4^1$ |

Figure 5

600

| Generate a Markov decision process (MDP) plan from the progressive task unit structure | 610 |

| Define an executable action strategy from the MDP | 620 |

Figure 6

700

710       720               730

| *State s* | *Action a* | *Successor states SS* |
|---|---|---|
| $s_0^0$ | Wait | $\{(s_1^1, \text{person})\}$ |
| $s_1^1$ | Ask | $\{ (s_2^1, \text{A}), (s_2^2, \text{B}), (s_2^3, \text{none}) \}$ |
| $s_2^1$ | TaskA | $\{(s_3^1, \text{True})\}$ |
| $s_2^2$ | TaskB | $\{(s_3^2, \text{True})\}$ |
| $s_2^3$ | Bye | $\{(s_4^1, \text{True})\}$ |
| $s_3^1$ | Bye | $\{(s_4^1, \text{True})\}$ |
| $s_3^2$ | Bye | $\{(s_4^1, \text{True})\}$ |
| $s_4^1$ | Bye | $\{(s_4^1, \text{True})\}$ |

Figure 7

900

910

| State s | Action a | Successor states SS |
|---------|----------|---------------------|
| $s_0^0$ | Wait | $\{(s_1^1, \text{person})\}$ |
| $s_1^1$ | Ask | $\{(s_2^1, A), (s_2^2, B), (s_2^3, none)\}$ |
| $s_2^1$ | TaskA | $\{(s_3^1, \text{True})\}$ |
| $s_2^2$ | TaskB | $\{(s_3^2, \text{True})\}$ |
| $s_2^3$ | Bye | $\{(s_4^1, \text{True})\}$ |
| $s_3^1$ | Bye | $\{(s_4^1, \text{True})\}$ |
| $s_3^2$ | Bye | $\{(s_4^1, \text{True})\}$ |
| $s_4^1$ | Bye | $\{(s_4^1, \neg\alpha_3^1.\psi), (f_1, \alpha_3^1.\psi)\}$ |

820

| State s | Action a | Successor states SS |
|---------|----------|---------------------|
| $f_1$ | Recover1 (go welcome point) | $\{(s_0^0, \text{True})\}$ |

Figure 8

Figure 9

Europäisches
Patentamt

European
Patent Office

Office européen
des brevets

# EUROPEAN SEARCH REPORT

Application Number

EP 21 30 5896

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/357263 A1 (GLATFELTER JOHN W [US] ET AL) 14 December 2017 (2017-12-14) <br> * figures 1-4 * <br> * paragraphs [0018] – [0021] * <br> * paragraphs [0032] – [0049] * <br> * paragraphs [0051] – [0058] * <br> ----- | 1-15 | INV. <br> G06N7/00 <br> G05B13/02 <br> G06N5/02 <br> G06N3/00 |
| X | CN 106 447 028 A (JIANGSU IOT RES DEV CT) 22 February 2017 (2017-02-22) <br> * figures 3, 5 * <br> * paragraphs [0043] – [0063] * <br> ----- | 1-15 | |

TECHNICAL FIELDS
SEARCHED      (IPC)

G06N
G05B

The present search report has been drawn up for all claims

| Place of search | Date of completion of the search | Examiner |
|---|---|---|
| The Hague | 20 December 2021 | Millet, Guillaume |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 30 5896

This annex lists the patent family members relating to the patent documents cited in the above-mentioned European search report.
The members are as contained in the European Patent Office EDP file on
The European Patent Office is in no way liable for these particulars which are merely given for the purpose of information.

20-12-2021

| Patent document cited in search report | | Publication date | Patent family member(s) | | Publication date |
|---|---|---|---|---|---|
| US 2017357263 | A1 | 14-12-2017 | US 2017357263 A1 | | 14-12-2017 |
| | | | US 2018259964 A1 | | 13-09-2018 |
| CN 106447028 | A | 22-02-2017 | NONE | | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RICHARD BELLMAN.** A markovian decision process. Indiana Univ. Math. J

- **R.A. HOWARD.** *Dynamic Programming and Markov Processes*